# EUROPÄISCHE PATENTSCHRIFT

(11) **EP 1 072 473 B1**
(45) Veröffentlichungstag und Bekanntmachung des Hinweises auf die Patenterteilung: **01.02.2006**
(21) Anmeldenummer: 00114826.1
(22) Anmeldetag: 11.07.2000
(51) Int. Cl.: B60R 7/02, B60P 1/00, A47B 46/00

(54) **Kraftfahrzeug mit einem Behälteraufbau für Frachtgut**
Vehicle container assembly for goods
Construction d'un conteneur à marchandises pour véhicule

(30) Priorität: 15.07.1999 DE 29912363 U
(43) Veröffentlichungstag der Anmeldung: 31.01.2001
(73) Patentinhaber: RKB-Reparatur und Karosseriebau GmbH, D-04720 Döbeln (DE)
(72) Erfinder: Hoffmann, Hardwig, 04720 Mochau (DE); Schulz, Jürgen, 04720 Döbeln (DE)
(74) Vertreter: Busse & Busse Patentanwälte

(56) Entgegenhaltungen:
- EP-A- 0 534 374
- DE-A- 3 101 133
- DE-A- 19 646 531
- GB-A- 2 292 306
- US-A- 3 115 254
- US-A- 3 338 423
- US-A- 5 022 539
- PATENT ABSTRACTS OF JAPAN vol. 1998, no. 01, 30. Januar 1998 (1998-01-30) -& JP 09 226466 A (SUZUKI MOTOR CORP), 2. September 1997 (1997-09-02)

## Beschreibung

Die Erfindung betrifft ein Kraftfahrzeug mit einem Behälteraufbau für Frachtgut, insbesondere Pakete o. dgl., gemäß dem Oberbegriff des Anspruchs 1.

Gemäß der gattungsbildenden Offenlegung EP 0 534 374 A1 ist ein Kraftfahrzeug mit einem Behälteraufbau bekannt, in dessen Innenraum ein Traggestell mit schwenkbaren Regalböden vorgesehen ist. Diese Regalböden sind durch Klappscharniere und Auflagen in der Fahrstellung gehalten, so daß beim Fahren störende Klappergeräusche im Behälteraufbau entstehen.

Die Erfindung befaßt sich mit dem Problem, ein Kraftfahrzeug zum Transport von Frachtgut in einem Behälteraufbau zu schaffen, in dem ein mit Regalsäulen und Regalböden versehenes Traggestell durch eine einfach handhabbare und geräuschdämpfende Halterung sowohl in Gebrauchs- als auch Nichtgebrauchsstellung festlegbar ist.

Die Erfindung löst dieses Problem mit einem Kraftfahrzeug mit den Merkmalen des Anspruchs 1. Hinsichtlich wesentlicher weiterer Ausgestaltungen wird auf die Ansprüche 2 bis 7 verwiesen.

Das Kraftfahrzeug weist einen Behälteraufbau auf, in dessen Innenraum ein oder mehrere Traggestell(e) mit an vertikalen Regalsäulen gehaltenen Regalböden zur Aufnahme des Frachtgutes vorgesehen sind. Diese Regalböden sind aus ihrer im wesentlichen horizontalen Gebrauchs- in eine Nichtgebrauchsstellung klappbar abgestützt und bilden mit den Regalsäulen ein Klappsystem, das eine schnelle Umrüstung des Behälteraufbaus eines beispielsweise zur Paketverteilung vorgesehenen Verteilfahrzeuges ermöglicht, derart, daß dies auch nach Art eines Großraumfahrzeugs einsetzbar ist.

In der Gebrauchsstellung wird das Traggestell durch jeweilige Verbindungsbaugruppen zwischen Regalboden und Regalsäulen zu einer schwingstabilen Trageinheit so ausgesteift, daß bei Benutzung des Kraftfahrzeugs mit den beladenen und/oder nichtbeladenen Regalböden im Innenraum des Behälteraufbaus zusätzliche Geräusche durch instabile Bauteilverbindungen am Traggestell vermieden sind und eine wesentliche Verbesserung der Transportbedingungen für den Fahrzeugnutzer erreicht ist. In der geklappten Nichtgebrauchsstellung sind die Regalböden bis zu einer zusätzlichen Verbindungsbaugruppe hin verschwenkt und in deren Bereich so fixiert, daß Schwingbewegungen des Fahrzeugs kompensiert werden und Anschlaggeräusche durch bewegliche Teile im Behälteraufbau sicher vermieden sind.

Das Traggestell weist zur Abstützung der Regalböden jeweilige mit zumindest einem Dämpfungselement, beispielsweise aus elastomerem Kunststoff, versehene Verbindungsbaugruppen auf, die in den Eckbereichen des Regalbodens zu den Regalsäulen bzw. zur Wandung des Behälteraufbaus hin so angeordnet sind, daß mit einem eine Verspannung der Teile bewirkenden Verbindungseingriff eine besonders schwingstabile Gebrauchsstellung erreicht ist und mittels der Dämpfungs-Gummiteile der Geräuschpegel deutlich gesenkt werden kann. Im Bereich von paarweise angeordneten, lösbaren Verbindungsbaugruppen sind aus den Verbindungseingriff lösbare Riegelglieder vorgesehen, so daß nach deren Entriegelung der jeweilige Regalboden aus seiner Gebrauchsstellung durch eine Schwenkbewegung um zumindest eine ortsfeste Gelenkbaugruppe in die Nichtgebrauchsstellung klappbar ist und in dieser ebenfalls durch Dämpfungselemente geklemmt sind.

Der Behälteraufbau ist mit diesem Traggestell an unterschiedliche Transportaufgaben, beispielsweise Frachtgüter mit unterschiedlichen Abmessungen und/oder Gewichten, anpaßbar. Die Regalböden des Traggestells sind mit wenigen Handgriffen in ihre jeweilige Position zu verlagern, wobei ohne spezielle Hilfswerkzeuge auch durch weniger geübte Fahrzeugnutzer ein schneller Umbau möglich ist, dabei die Regalböden weitgehend zwangsgeführt in die geräuschdämpfende Stellungen gelangen und hier verriegelt werden. Eine weitere Senkung des Geräuschpegels im Behälteraufbau ist dadurch erreichbar, daß die Regalsäulen im Bereich ihrer Verbindung zum Behältboden- bzw. zur -decke ebenfalls mit Dämpfungsteilen aus Gummi o. dgl. versehen sind, mit diesen die Regalsäulen in der Einbaulage in einer Spannstellung gehalten sind und damit das Traggestell insgesamt die schwingstabile Trageinheit bildet.

Weitere Einzelheiten und vorteilhafte Wirkungen der Erfindung ergeben sich aus der nachfolgenden Beschreibung und der Zeichnung, in der ein Ausführungsbeispiel des Gegenstands der Erfindung näher veranschaulicht ist. In der Zeichnung zeigen:
- Fig. 1: eine teilweise geschnittene Seitenansicht eines in einem Behälteraufbau befindlichen Traggestells,
- Fig. 2: eine vergrößerte Ausschnittsdarstellung einer lösbaren Verbindungsbaugruppe zwischen einer Regalsäule und einem Regalboden des Traggestells gemäß einer Linie II-II in Fig. 6,
- Fig. 3: eine Seitenansicht eines am Regalboden als Rastprofilteil vorgesehenen Verbindungsgliedes der lösbaren Riegelbaugruppe,
- Fig. 4: eine Stirnansicht des Rastprofilteils gemäß Fig. 3,
- Fig. 5: eine teilweise geschnittene Vorderansicht des in Gebrauchsstellung gemäß Fig. 1 befindlichen Regalbodens,
- Fig. 6: eine teilweise geschnittene Draufsicht des Regalbodens gemäß Fig. 5,
- Fig. 7 und Fig. 8: eine Stirnansicht bzw. eine Draufsicht eines seitlichen Abschlußprofilteils am Regalboden gemäß Fig. 6,
- Fig. 9 und Fig. 10: eine Stirn- bzw. Seitenansicht eines Aufnahmeprofilteils für die Riegelbaugruppe, die den Regalboden in Nichtgebrauchsstellung gemäß Fig. 1 mit einem Klemmprofilteil fixiert,
- Fig. 11 und Fig. 12: eine Stirn- bzw. Seitenansicht des Aufnahmeprofilteils der Riegelbaugruppe, die den Regalboden im Bereich der Regalsäulen in der Gebrauchsstellung gemäß Fig. 2 fixiert,
- Fig. 13 und Fig. 14: eine Stirn- bzw. Seitenansicht eines Drehbolzens in Einzeldarstellung, der den Regalboden im Bereich von jeweiligen ortsfesten Gelenkbaugruppen abstützt,
- Fig. 15 bzw. Fig. 16: eine Stirn- bwz. Seitenansicht eines den Drehbolzen im Bereich der jeweiligen Regalsäule aufnehmenden Stützprofilteils, und
- Fig. 17: eine perspektivische Einzeldarstellung eines als Dämpfungselement im Bereich der Regalsäule (Fig. 2) vorgesehenen Klemmprofilteils.

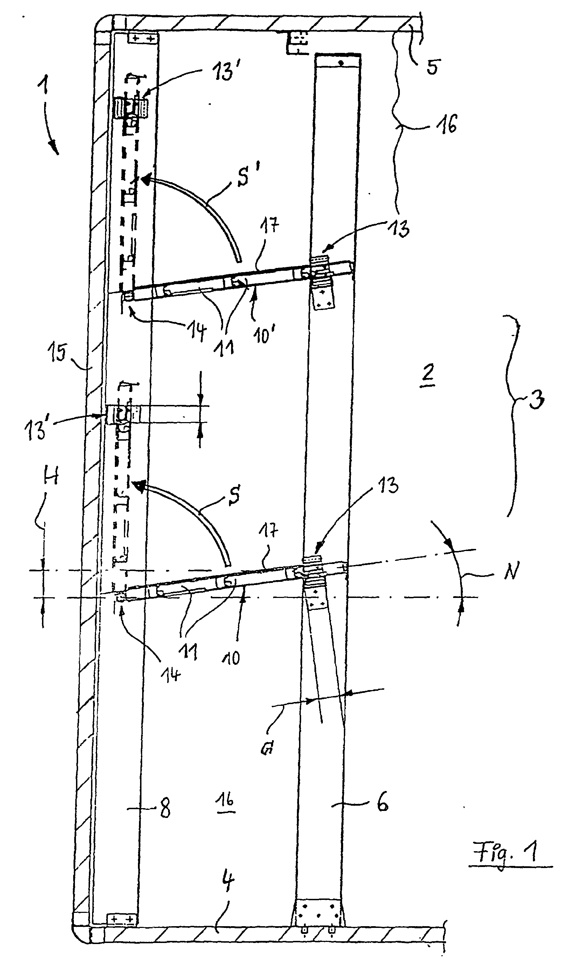

In Fig. 1 ist ein insgesamt mit 1 bezeichneter Behälteraufbau eines nicht näher dargestellten Kraftfahrzeugs veranschaulicht, wobei im Innenraum 2 des Behälteraufbaus 1 ein zur Aufnahme von Frachtgut, insbesondere Pakete o. dgl., vorgesehenes Traggestell 3 zwischen einer Bodenplatte 4 und einer Dachplatte 5 abgestützt ist. Das Traggestell 3 weist in dieser Ausführung zwei vordere Regalsäulen 6, 7 und zwei hintere Regalsäulen 8, 9 (Fig. 5, Fig. 6) auf, zwischen denen zwei im wesentlichen eine horizontale Gebrauchsstellung aufweisende Regalböden 10 und 10' übereinander abgestützt sind und so jeweilige Gefache zur Aufnahme des Transportgutes bilden.

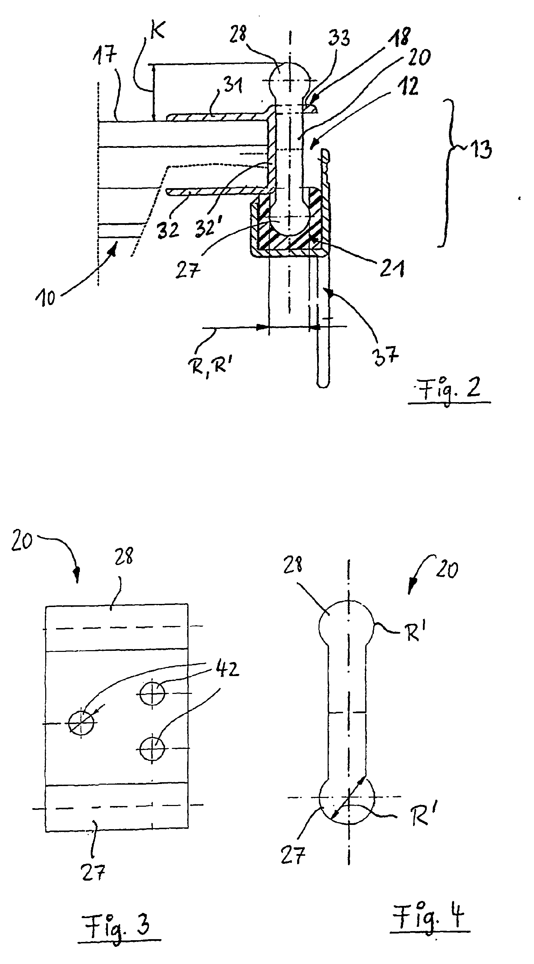

Der erfindungsgemäß ausgerüstete Behälteraufbau 1 ist mit einem Traggestell 3 versehen, bei dem der jeweilige Regalboden 10, 10' in seinen vier Eckbereichen A, B bzw. C, D (Fig. 6) jeweils paarweise beidseits einer Quermittelebene E gegenüberliegende, konstruktiv gleiche Stützbaugruppen aufweist. Die Eckbereiche A und B sind jeweils mit einer ein lösbares Verbindungsglied 12 (Fig. 2) aufweisenden Riegelbaugruppen 13 versehen und die Eckbereiche C und D weisen jeweils eine ortsfeste Gelenkbaugruppe 14 auf. In der Seitenansicht gemäß Fig. 1 ist das Traggestell 3 mit den zwei Regalböden 10, 10' veranschaulicht, die in einer schwingstabilen Gebrauchsstellung (dargestellt durch Strichlinien) gehalten sind und aus dieser Gebrauchsstellung (Fig. 5, Fig. 6) in eine Nichtgebrauchsstellung (dargestellt durch unterbrochene Linien in Fig.1) klappbar sind. Diese Schwenkbewegung ist durch jeweilige Pfeils S, S' dargestellt, wobei es sich versteht, daß zur Rückverlagerung in die Gebrauchsstellung eine Schwenkbewegung (nicht dargestellt) in die entgegengesetzte Richtung auszuführen ist.

Der in Fig. 5 und Fig. 6 in Einzeldarstellung veranschaulichte Regalboden 10 ist beidseits seiner Quermittelebene E an den Querseiten mit den beiden vorderseitigen Riegelbaugruppen 13 und den beiden rückseitigen Gelenkbaugruppen 14 versehen. In einer nicht dargestellten Ausführung ist ebenso denkbar, daß diese Baugruppen an der vorderen bzw. hinteren Längsseite des Regalbodens 10 paarweise gegenüberliegend angeordnet sind und dieser mit dieser Stützkonstruktion parallel zur Seitenwand 15 des Behälteraufbaus 1 klappbar ist. Ebenso ist denkbar, daß der Regalboden 10 in seiner Gebrauchsstellung über zwei rückseitige Gelenkbaugruppen 14 unmittelbar mit einer der Wandungen, beispielsweise der Seitenwand 15 bzw. der Vorderwand 16, verbunden ist.

Die Gebrauchsstellungen des Regalbodens 10 gemäß Fig. 1 bzw. Fig. 6 verdeutlichen, daß dieser mit den ortsfesten Gelenkbaugruppen 14 und den vorderseitig die Regalsäulen 6 und 7 erfassenden Riegelbaugruppen 13 eine besonders stabile Vier-Punkt-Abstützung aufweist. Die Teile der beiden Riegelbaugruppen 13 werden in Gebrauchsstellung in einem Verbindungseingriff so verspannt, daß das Traggestell 3 mit den Regalsäulen 6, 7, 8, 9 und dem Regalboden 10 insgesamt eine schwingstabil ausgesteifte Stützeinheit bildet.

In der dargestellten Ausführungsform sind die beiden vorderen Riegelbaugruppen 13 und die beiden hinteren Gelenkbaugruppen 14 mit einem vertikalen Abstand H (Fig. 1) angeordnet, so daß der Regalboden 10 bzw. 10' in Gebrauchsstellung zur Wandung 15 des Behälteraufbaus 1 hin geneigt ist (Neigungswinkel N). Damit sind die auf einer Oberseite 17 befindlichen Transportgüter, beispielsweise Pakete o. dgl., in ihrer Transportstellung weitgehend verschiebesicher positioniert. Der Regalboden 10 ist dabei aus mehreren Regalprofilen 11 zusammengesetzt, die insbesondere aus Leichtmetall bestehen und mit vorteilhaft geringem LeerGewicht die Bauteile in den Eckbereichen A, B, C, D gering belasten.

Die Seitenansicht gemäß Fig. 1 zeigt mit der Strichdarstellung eine im wesentlichen vertikale Nichtgebrauchsstellung, in die der Regalboden 10 verlagerbar ist. In dieser vertikalen Nichtgebrauchsstellung wird der Regalboden über zumindest eine dritte Riegelbaugruppe 13' im Bereich der hinteren Regalsäulen 8, 9 schwingstabil gehalten. In zweckmäßiger Ausführung ist der Regalboden 10 bzw. 10' nach Lösen der beiden vorderen Riegelbaugruppen 13 aus seiner Gebrauchsstellung nach oben in die vertikale Nichtgebrauchsstellung klappbar und in dieser über zwei jeweils an den hinteren Regalsäulen 8, 9 vorgesehene Riegelbaugruppen 13' festlegbar.

Die vergrößerte Ausschnittsdarstellung gemäß Fig. 2 verdeutlicht, daß das im Bereich der Riegelbaugruppen 13 vorgesehene Verbindungsglied 12 jeweils als ein randseitig mit dem Regalboden 10 im Bereich eines Aufnahmeprofilteils 18 verbundenes Rastprofilteil 20 ausgebildet ist. Dieses Rastprofilteil 20 greift seinerseits in ein an der Regalsäule 6 bzw. 7 abgestütztes und zumindest teilweise aus einem elastischen Material bestehendes Klemmprofilteil 21 ein, so daß damit der Regalboden 10 in dem geräuschdämpfenden Verbindungseingriff (Fig. 6) fixiert ist.

In vorteilhafter Ausführung besteht das Klemmprofilteil 21 aus einem elastischem Gummi-Material, mit dem im Verbindungsbereich der Stützbauteile auftretende Bauteilschwingungen während einer Fahrzeugbewegung kompensierbar sind und damit der Geräuschpegel innerhalb des Behälteraufbaus 1 insgesamt verringert wird. Ebenso ist denkbar, daß im Bereich der Riegelbaugruppe 13 das jeweilige Rastprofilteil 20 aus einem hinreichend stabilen, geräuschdämpfenden Kunststoffmaterial, Hartgummi o. dgl. hergestellt ist und dieses in ein aus Metall o. dgl. bestehendes Klemmprofilteil (nicht dargestellt) eingreift.

Eine vergrößerte Einzeldarstellung gemäß Fig. 17 zeigt das Klemmprofilteil 21, wobei deutlich wird, daß das Klemmprofilteil 21 von einem als das Dämpfungselement wirksamen, einstückig geformten U-Profilkörper gebildet ist, der vollständig aus dem elastischen Material besteht. Jeweilige im Bereich eines Öffnungsschlitzes 22 den Aufnahmeraum 23 teilweise bogenförmig (Formradius R) übergreifende Profilschenkel 24 und 25 sind so geformt, daß zwischen diesen das aus Metall, vorzugsweise Aluminium, bestehende Rastprofilteil 20 (Fig. 2) in die Verbindungsstellung einführbar bzw. aus dieser lösbar ist und dabei die Profilschenkel 24, 25 entsprechend einer Pfeilrichtung F elastisch verlagert werden. Der Formradius R ist dabei in seinen Abmessungen auf eine Profilform R' am Rastprofilteil 20 so abgestimmt, daß eine kraft- und formschlüssige Arretierung erreicht wird. Die Länge G des Klemmprofilteils 21 ist weitgehend variabel ausführbar, so daß durch eine belastungsoptimale Dimensionierung der Teile auch entsprechend große Gewichtsbelastungen des Regalbodens 10 sicher abgestützt werden.

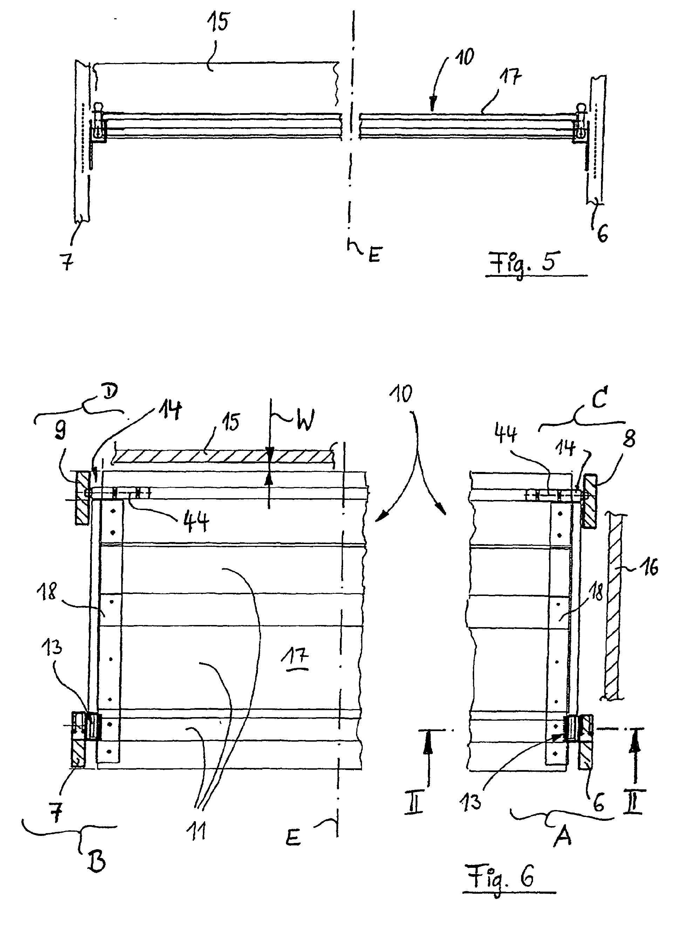

Das randseitig am Regalboden 10 festgelegte Rastprofilteil 20 weist für diese Verbindungskonstruktion in vorteilhafter Ausführung zwei im Querschnitt konturgleiche und über den jeweiligen Rand des Regalbodens 10 vorstehende Formerweiterungen 27 und 28 auf (Fig. 3, Fig. 4), wobei in Gebrauchsstellung (Fig. 2) die untere Formerweiterung 27 in in das Klemmprofilteil 21 der vorderen Riegelbaugruppe 13 eingreift. Dabei ist die einen Radius R' aufweisende Formerweiterung 27 im Berich des Klemmprofilteils 21 von Formradius R umfaßt.

Die in Fig. 1 in Prinzipdarstellung veranschaulichte Nichtgebrauchsstellung des Regalbodens 10 wird dadurch gesichert, daß die Formerweiterung 28 an einem nicht näher dargestellten, dem Klemmprofilteil 21 gemäß Fig. 17 weitgehend entsprechenden Klemmprofilteil an der hinteren Regalsäule 8, 9 im Bereich der Riegelbaugruppen 13' festgelegt wird (Fig. 1, Strichdarstellung).

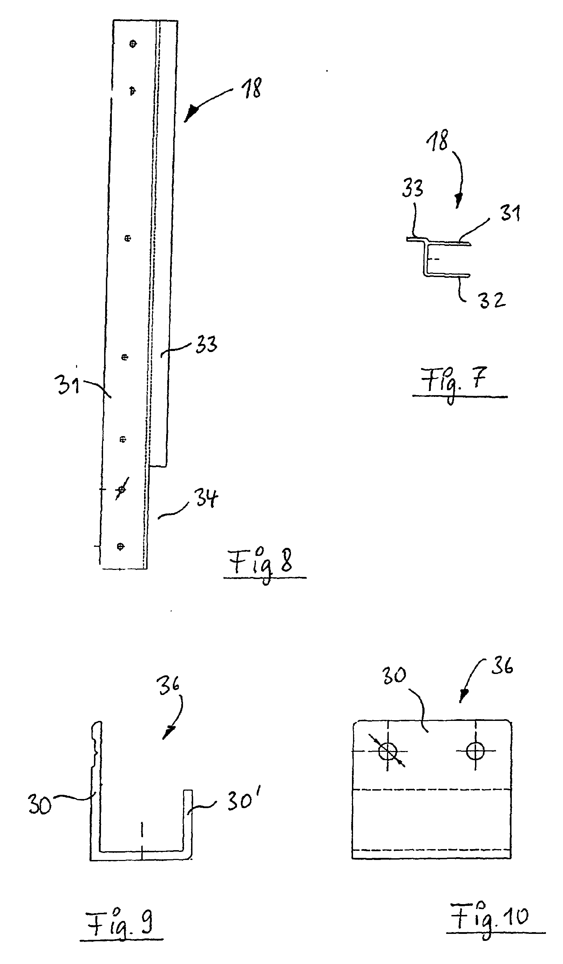

Fig. 7 und Fig. 8 zeigen in jeweiligen Ansichten das randseitig am Regalboden 10 vorgesehene Aufnahmeprofilteil 18, das mit einem oberen und einem unteren Schenkel 31, 32 am Regalboden 10 abgestützt ist und im Bereich eines im Bereich der Oberseite 17 (Fig. 2) vorstehenden Ansatzteils 33 eine Ausklinkung 34 aufweist, in deren Bereich das Rastprofilteil 20 (Fig. 2) die Oberseite 17 mit einem Abstand K so überragt, daß die Formerweiterung 28 frei ist und mit dieser die vorbeschriebene Verriegelung des Regalbodens 10 in der Nichtgebrauchsstellung möglich ist (Fig. 1) .

Zur Festlegung der jeweiligen nicht näher dargestellten Klemmprofilteile 21 im Bereich der an den hinteren Regalsäulen 8, 9 befindlichen Riegelbaugruppen 13' ist ein in Fig. 9 und Fig. 10 dargestelltes Aufnahmeprofil 36 vorgesehen, in dem das Klemmprofilteil 21 beispielsweise über eine Klebeverbindung (nicht dargestellt) zwischen einem Halteschenkel 30 und einem Anlageschenkel 30' gehalten ist und dabei der Öffnungsschlitz 22 des Klemmprofilteils 21 für die Formerweiterung 28 des Rastprofilteils 20 zugänglich bleibt.

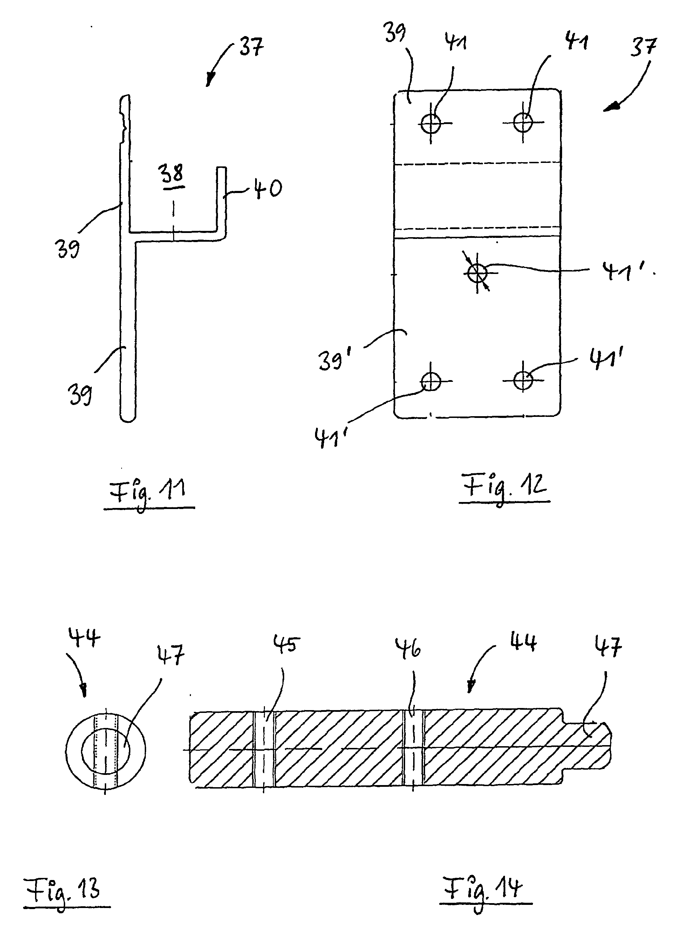

In Fig. 11 und in Fig. 12 ist ein für die vorderen Riegelbaugruppen 13 vorgesehenes Verbindungsprofilteil 37 (Fig. 2) in Einzeldarstellung veranschaulicht, wobei deutlich wird, daß dieses Verbindungsprofilteil 37 in einem Aufnahmeraum 38 das Klemmprofilteil 21 aufnimmt und dieses beispielsweise über eine Klebeverbindung an den U-förmigen Schenkeln 39, 40 festgelegt ist. Für eine stabile Verbindung des Profilteils 37 mit der jeweiligen Regalsäule 6 bzw. 7 sind mehrere Durchgangsbohrungen 41, 41' vorgesehen, die im Bereich des Schenkels 39 bzw. eines Tragansatzes 39' eingebracht sind. Über diese Bohrungen ist das Profilteil 37 mit geringem Aufwand durch jeweilige Schraubverbindungen an der Regalsäule 6 bzw. 7 festgelegt.

Auch das Rastprofilteil 20 (Fig. 3, Fig. 4) weist zwischen den beiden Formerweiterungen 27 und 28 mehrere Durchgangsbohrungen 42 auf, über die eine stabile Verbindung des Rastprofilteils 20 mit dem Regalboden 10 im Bereich des Aufnahmeprofilteils 18 möglich ist. Das Rastprofilteil 20 ist dabei im Bereich des mit der Ausklinkung 34 (Fig. 8) zugänglichen Basisschenkels 32'(Fig. 2) mit dem Aufnahmeprofilteil 18 verbunden, insbesondere über eine Schraubverbindung im Bereich der Bohrungen 42.

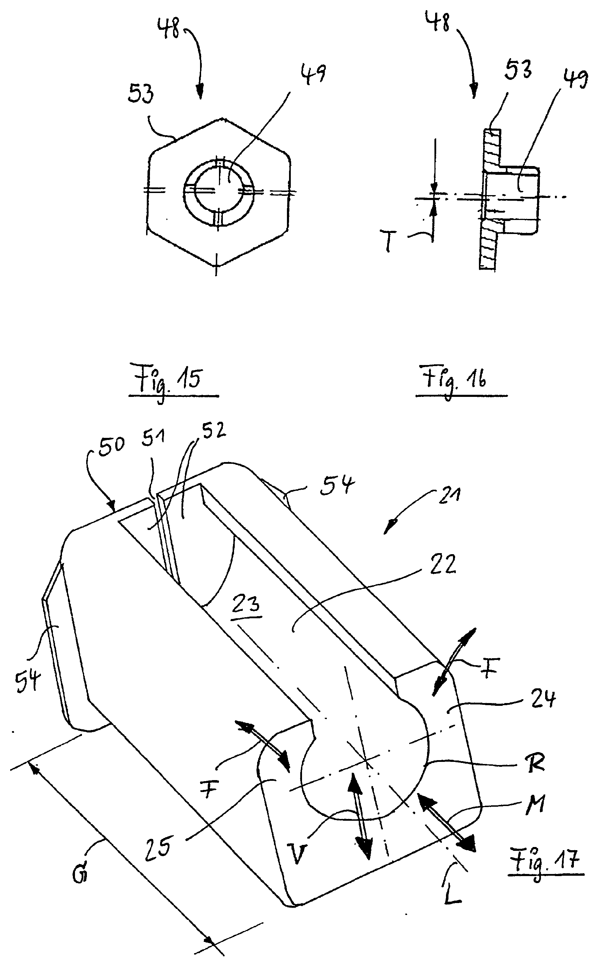

Für die schwenkbewegliche, ortsfeste Abstützung des Regalbodens 10 im Bereich der Gelenkbaugruppen 14 ist jeweils ein in Fig. 13 und in Fig. 14 dargestellter Drehbolzen 44 vorgesehen, der einerseits über zwei Gewindebohrungen 45, 46 mit dem Regalboden 10 verschraubt ist und an seinem freien Ende ein Führungsprofil 47 aufweist. In zweckmäßiger Ausführung greift dieses Führungsprofil 47 in eine in Fig. 15 und 16 dargestellte Stützhülse 48 im Bereich einer Exzenterbohrung 49 ein (Exzentrizität T).

Die Stützhülse 48 ist im Bereich der hinteren Regalsäulen 8, 9 jeweils so festgelegt, daß der Regalboden 10 über das Führungsprofil 47 der beiden gegenüberliegenden Drehbolzen 44 (Fig. 6) sowohl in der Gebrauchs- als auch in der Nichtgebrauchsstellung verspannt wird und damit der Regalboden 10 in jeder Klapp-Position eine gegen ungewolltes Lösen gesicherte Verspannung in den Eckbereichen A, B, C, D aufweist. Die Stützhülse 48 ist mit einem Sechs-Eck-Flansch 53 versehen, so daß die optimale Einbaulage der Stützhülse 48 mit geringem Aufwand mittels eines Maulschlüssels eingestellt werden kann. Mittels dieser Einstellung kann der Regalboden 10 in seiner Einbaulage optimal auf einen Wandungsabstand W (Fig. 6) so korrigiert werden, daß ein minimaler Spalt erzeugt ist und in dessen Bereich ein Hindurchrutschen von Frachtgut, insbesondere von Briefen o. dgl., sicher vermieden ist.

Das in Fig. 17 in Einzeldarstellung veranschaulichte Klemmprofilteil 21 ist in zweckmäßiger Ausführung an seiner in Einbaulage vorderen Stirnfläche 50 mit einer einen Schlitz 51 aufweisenden Wandung 52 versehen, an der die jeweilige Stirnseite des Rastprofilteils 20 in Einbaulage (Fig. 6) so anliegt, daß Schubbewegungen (Pfeil M) in Richtung der Längsachse L des Klemmprofilteils 21 ebenso gedämpft werden wie Schwingbewegungen in vertikaler Richtung (Pfeil V). Im Bereich der Stirnfläche 50 weist das Klemmprofilteil 21 einen äußeren Randflansch 54 auf, mit dem in Einbaulage die Stirnseite des Verbindungsprofils 37 abgedeckt wird und so ein Verletzungsschutz im Kantenbereich erreicht ist.

In einer weiteren, nicht näher dargestellten Ausführung des Traggestells 3 ist denkbar, daß die Gelenkbaugruppen 14 und/oder die im Behälteraufbau 1 abgestützten Regalsäulen 6, 7, 8, 9 ebenfalls mit geräuschdämpfenden Verbindungsteilen, beispielsweise im Nahbereich zur Bodenplatte 4 bzw. zur Dachplatte 5, versehen sind.

## Patentansprüche

1. Kraftfahrzeug mit einem Behälteraufbau (1) für Frachtgut, insbesondere Pakete o. dgl., mit einem im Innenraum (2) des Behälteraufbaus (1) vorgesehenen Traggestell (3) mit vertikalen Regalsäulen (6, 7, 8, 9), an denen zumindest ein eine im wesentlichen horizontale Gebrauchsstellung aufweisender Regalboden (10; 10') abgestützt ist, wobei der Regalboden (10; 10') in seinen vier Eckbereichen (A, B; C, D) jeweils paarweise gegenüberliegend mit zwei ein lösbares Verbindungsglied (12) aufweisenden Regalbaugruppen (13) und zwei ortsfesten Gelenkbaugruppen (14) versehen ist, derart, daß der Regalboden (10; 10') in einer schwingstabilen Gebrauchsstellung gehalten und aus dieser in eine Nichtgebrauchsstellung klappbar ist, **dadurch gekennzeichnet, daß** das Verbindungsglied (12) jeweils als ein randseitig mit dem Regalboden (10; 10') verbundenes Rastprofilteil (20) ausgebildet ist, dieses in ein an der Regalsäule (6, 7) abgestütztes Klemmprofilteil (21) eingreift und zumindest das Rastprofilteil (20) und/oder das Klemmprofilteil (21) im Bereich der Riegelbaugruppe (13) aus einem elastischen Gummi-Material bestehen derart, daß damit der Regalboden (10; 10') in einem geräuschdämpfenden Verbindungseingriff fixierbar ist.

2. Kraftfahrzeug nach Anspruch 1, **dadurch gekennzeichnet, daß** das Klemmprofilteil (21) von einem als Dämpfungselement wirksamen U-Profilkörper aus elastischem Kunststoff gebildet und zwischen dessen Profilschenkel (24, 25) das aus Metall, vorzugsweise Aluminium, bestehende Rastprofilteil (20) einführbar ist.

3. Kraftfahrzeug nach Anspruch 1 oder 2, **dadurch gekennzeichnet, daß** das randseitig am Regalboden (10; 10') festgelegte Rastprofilteil (20) mit zwei im Querschnitt konturgleichen und über den Regalbodenrand (17) vorstehenden Formerweiterungen (27, 28) versehen ist, derart, daß in Gebrauchsstellung die eine Formerweiterung (27) am Klemmprofilteil (21) der vorderen Riegelbaugruppe (13) und in Nichtgebrauchsstellung die andere Formerweiterung (28) an der Riegelbaugruppe (13') der hinteren Regalsäulen (8, 9) festlegbar ist.

4. Kraftfahrzeug nach einem der Ansprüche 1 bis 3, **dadurch gekennzeichnet, daß** die Gelenkbaugruppen (14) jeweils mit einem rückseitig am Regalboden (10; 10') festgelegten und mit einem freien Ende in ein Stützprofilteil (48) an der Regalsäule (8, 9) eingreifenden Drehbolzen (44) versehen sind.

5. Kraftfahrzeug nach Anspruch 4, **dadurch gekennzeichnet, daß** der Drehbolzen (44) an seinem freien Ende mit einem Führungsprofil (47) versehen ist, mit dem der Regalboden (10; 10') in eine Exzenterbohrung (49) des als Stützhülse ausgebildeten Stützprofilteils (48) eingreift.

6. Kraftfahrzeug nach einem der Ansprüche 1 bis 5, **dadurch gekennzeichnet, daß** die Gelenkbaugruppe (14) und/oder die im Behälteraufbau (1) abgestützten Regalsäulen (6, 7, 8, 9) ebenfalls mit geräuschdämpfenden Verbindungsteilen versehen sind.

7. Kraftfahrzeug nach einem der Ansprüche 1 bis 6, **dadurch gekennzeichnet, daß** die vorderen Riegelbaugruppen (13) und die hinteren Gelenkbaugruppen (14) mit einem vertikalen Abstand (H) angeordnet sind, derart, daß der Regalboden (10; 10') in Gebrauchsstellung zur Wandung (15) des Behälteraufbaus (1) hin geneigt ist.

## Claims

1. Motor vehicle having a container assembly (1) for the carriage of goods, in particular parcels or the like, having supporting racking (3) provided in the interior (2) of the container assembly (1), which supporting racking (3) has vertical columns (6, 7, 8, 9) on which is supported at least one shelf (10, 10') having a substantially horizontal in-use position, the shelf (10, 10') being provided, in its four corner regions (A, B, C, D) and in pairs of which the members are in each case situated opposite one another, with two rack sub-assemblies (13) having a detachable connecting member (12) and two fixed joint sub-assemblies (14), in such a way that the shelf (10, 10') is held in an in-use position in which it is stable against oscillation, and can be folded from the latter position to an out-of-use position, **characterised in that** the connecting member (12) is in each case in the form of a part (20) of latching profile which is connected to an edge of the shelf (10, 10'); the said part (20) engages in a part (21) of gripping profile which is supported on the column (6, 7), and at least the part (20) of latching profile and/or the part (21) of gripping profile is composed of an elastic rubber material in the region of the latch-bolt sub-assembly (13), in such a way that the shelf (10, 10') can be fixed in place therewith in a connected engagement which damps noise.

2. Motor vehicle according to claim 1, **characterised in that** the part (21) of gripping profile is formed by a U-profiled body of elastic plastics material, which body acts as a damping element and the part (20) of latching profile, which is composed of metal, preferably aluminium, can be inserted between the sides (24, 25) of its profile

3. Motor vehicle according to claim 1 or 2, **characterised in that** the part (20) of latching profile which is anchored to the shelf (10, 10') is provided with two shaped enlargements (27, 28) which are of the same outline in cross-section and which project beyond the edge (17) of the shelf, in such a way that, in the in-use position, one shaped enlargement (27) can be anchored to the part (21) of gripping profile of the front latch-bolt sub-assembly (13), and in the not-in-use position the other shaped enlargement (28) can be anchored to the latch-bolt sub-assembly (13') on the rear columns (8, 9).

4. Motor vehicle according to one of claims 1 to 3, **characterised in that** the joint sub-assemblies (14) are each provided with a pivot pin (44) which is anchored at its rear to the shelf (10,10') and which engages, by a free end, in a part (48) of supporting profile on the column (8, 9).

5. Motor vehicle according to claim 4, **characterised in that** the pivot pin (44) is provided at its free end with a guiding profile (47) by which the shelf (10, 10') engages in an eccentric hole (49) in the part (48) of supporting profile, which latter is in form of a supporting sleeve.

6. Motor vehicle according to one of claims 1 to 5, **characterised in that** the joint sub-assembly (14), and/or the columns (6, 7, 8, 9) which are supported in the container assembly (1), are also provided with noise-damping connecting parts.

7. Motor vehicle according to one of claims 1 to 6, **characterised in that** the front latch-bolt sub-assemblies (13) and the rear joint sub-assemblies (14) are arranged at a vertical spacing (H) such that the shelf (10, 10') is inclined towards the wall (15) of the container assembly (1) in the in-use position.

## Revendications

1. Véhicule automobile avec un conteneur (1) pour marchandises, en particulier pour des paquets ou autres, avec une ossature support (3) placée dans l'espace intérieur (2) du conteneur (1) et avec des montants d'étagère verticaux (6, 7, 8, 9) sur lesquels est appuyée au moins une tablette d'étagère (10, 10') présentant une position d'utilisation essentiellement horizontale, la tablette d'étagère (10, 10'), dans ses quatre zones de coin (A, B, C, D), étant pourvue de deux composants d'étagères (13) présentant un élément d'assemblage détachable (12) et de deux composants d'articulation fixes (14), disposés face à face et agencés par paire de manière telle que la tablette d'étagère (10, 10') est maintenue dans une position d'utilisation stable et peut être rabattue à partir de là dans une position de non-utilisation, **caractérisé en ce que** l'élément d'assemblage (12) est réalisé chaque fois sous la forme d'une pièce profilée à encliqueter (20) reliée au bord de la tablette d'étagère (10, 10'), **en ce que** cette pièce s'engage dans une pièce profilée de serrage (21) s'appuyant sur le montant d'étagère (6, 7) et **en ce qu'**au moins la pièce profilée à encliqueter (20) et/ou la pièce profilée de serrage (21) au niveau du composant de verrouillage (13) soi(en)t constituée(s) d'un matériau en caoutchouc élastique de sorte que la tablette d'étagère (10, 10') puisse être fixée dans une opération d'assemblage amortissant les bruits.

2. Véhicule automobile selon la revendication 1, **caractérisé en ce que** la pièce profilée de serrage (21) est constituée d'un corps à profil en U agissant comme élément amortisseur en matière synthétique élastique et entre les flancs profilés (24, 25) duquel peut être introduite la pièce profilée à encliqueter (20) réalisée en métal, de préférence en aluminium.

3. Véhicule automobile selon la revendication 1 ou 2, **caractérisé en ce que** la pièce profilée à encliqueter (20) fixée en bordure de la tablette d'étagère (10, 10') est munie de deux prolongements moulés (27, 28) avec une section transversale de même contour et débordant du bord (17) de la tablette d'étagère, de manière telle qu'en position d'utilisation, l'un des prolongements moulés (27) peut être fixé sur la pièce profilée de serrage (21) du composant de verrouillage avant (13) et qu'en position de non-utilisation, l'autre prolongement moulé (28) peut être fixé sur le composant de verrouillage (13') des montants arrière d'étagère (8, 9).

4. Véhicule automobile selon l'une quelconque des revendications 1 à 3, **caractérisé en ce que** les composants d'articulation (14) sont chacun munis d'un axe pivot (44) fixé à l'arrière de la tablette d'étagère (10, 10') et s'engageant par une extrémité libre dans une pièce profilée de soutien (48) sur le montant d'étagère (8, 9).

5. Véhicule automobile selon la revendication 4, **caractérisé en ce que** l'axe pivot (44) est muni, à son extrémité libre, d'un profil de guidage (47) grâce auquel la tablette d'étagère (10, 10') s'engage dans un perçage excentrique (49) de la pièce profilée de soutien (48) conçue en tant que douille de soutien.

6. Véhicule automobile selon l'une quelconque des revendications 1 à 5, **caractérisé en ce que** le composant d'articulation (14) et/ou les montants d'étagère (6, 7, 8, 9) soutenus dans le conteneur (1) sont également pourvus d'éléments d'assemblage amortissant les bruits.

7. Véhicule automobile selon l'une quelconque des revendications 1 à 6, **caractérisé en ce que** les composants avant de verrouillage (13) et les composants arrière d'articulation (14) sont disposés avec un écartement vertical (H) de manière telle que la tablette d'étagère (10, 10') en position d'utilisation est inclinée par rapport à la paroi (15) du conteneur (1).
